# DEMANDE DE BREVET EUROPEEN

(11) **EP 4 361 663 A1**
(43) Date de publication de la demande: **01.05.2024**
(21) Numéro de dépôt: 23204185.5
(22) Date de dépôt: 17.10.2023
(51) Int. Cl.: G01S 7/02, G01S 3/02

(54) **DISPOSITIF DE RÉCEPTION ÉLECTROMAGNÉTIQUE COMPRENANT UNE VOIE DE RÉCEPTION TÉMOIN**

(30) Priorité: 27.10.2022 FR 2211211
(71) Demandeur: THALES, 92190 Meudon (FR)
(72) Inventeur: LE GALL, Renan, 78210 SAINT CYR L'ECOLE (FR); BON, Nicolas, 78990 ELANCOURT (FR); GUILLAMET, Ronan, 78990 ELANCOURT (FR); FORMONT, Stéphane, 78990 ELANCOURT (FR)
(74) Mandataire: Atout PI Laplace

(57) **Abrégé**

L'invention concerne un dispositif de réception électromagnétique (1) comprenant une antenne de réception principale (10) d'un signal incident et une voie de réception principale (12) configuré pour traiter le signal incident, le dispositif de réception électromagnétique (1) comprenant une antenne de réception auxiliaire (20) et une voie de réception auxiliaire (22) reliée à ladite antenne de réception auxiliaire (20), l'antenne de réception auxiliaire (20) étant adaptée pour être disposée en direction d'un émetteur perturbateur (4) et configurée pour recevoir un signal perturbateur depuis l'émetteur perturbateur (4), la voie de réception auxiliaire (22) étant configurée pour traiter le signal perturbateur, le dispositif de réception électromagnétique (1) comprenant également un bloc de comparaison de signal et de suppression du signal perturbateur (30) apte à comparer le signal incident de la voie de réception principale (12) et le signal perturbateur et adapté pour supprimer le signal perturbateur du signal incident en fonction de ladite comparaison.

## Description

L'invention se situe dans le domaine de la compatibilité électromagnétique appliquée aux récepteurs électromagnétiques et plus particulièrement aux récepteurs radar. Néanmoins, l'invention concerne de manière générale le domaine de la télécommunication ou le domaine de la radionavigation.

De plus, l'invention concerne un dispositif de télécommunication pouvant également s'appuyer sur la mise en oeuvre de dispositifs électro optique.

De manière connue, un récepteur électromagnétique doit recevoir, identifier et localiser des signaux d'intérêts. Un signal reçu par un dispositif de communication électromagnétique dans un réseau de communication sans fil est affecté par de nombreux facteurs. Par exemple, la distance entre le dispositif de communication et un émetteur électromagnétique qui a émis le signal reçu dans le réseau de communication sans fil a une incidence directe sur la force du signal reçu. De plus, les paramètres environnementaux ont tendance à influencer la qualité du signal reçu. Et, malheureusement, le spectre électromagnétique est généralement encombré par un certain nombre de signaux qui sont vus comme des gêneurs pour le récepteur électromagnétique qui reçoit et doit analyser un signal reçu spécifique.

Dès lors, il est souhaitable pour un tel type de dispositif de réception électromagnétique de pouvoir recevoir et analyser un signal reçu spécifique sans être impacté par son les signaux générés par son environnement.

Avec cet objectif à l'esprit, l'utilisateur peut alors orienter simultanément le dispositif de communication sans fil et son antenne dans une myriade de directions. Cependant, même de tels remèdes peuvent ne pas être disponibles dans certaines conditions telles que, par exemple, lorsque l'utilisateur est incapable de se déplacer librement ou d'effectuer des tâches fastidieuses telles que l'orientation du dispositif de communication sans fil.

Or, la plupart des perturbateurs électromagnétiques sont situés à proximité « immédiate » du récepteur. Il s'agit bien souvent des autres émetteurs de la plateforme (radar de bord, liaison de communication, GPS...) qui supporte le récepteur. Suivant le niveau du signal du perturbateur, la perturbation engendrée peut se traduire de différentes manières, le signal du perturbateur peut :
- saturer le récepteur, empêchant ainsi la réception du signal utile,
- être détecté par le récepteur sans pour autant être saturant notamment dans une dynamique de réception multi-signal du récepteur, par le biais de plusieurs pistes, des pistes du perturbateur apparaissent alors aux opérateurs, perturbant ainsi leur analyse,
- perturber la mesure du signal utile sans pour autant être détecté,
- ne pas être perturbant pour le récepteur si son niveau de puissance est suffisamment faible.

Afin d'ignorer les signaux des perturbateurs, il est généralement appliqué au récepteur un masque fréquentiel, c'est-à-dire un masque sur une plage de fréquence définie, et temporel, sur ces émissions du perturbateur de sorte à permettre au récepteur d'ignorer délibérément lé présence du perturbateur et de ses signaux. Le masquage doit être le plus précis possible pour éviter d'aveugler le récepteur par rapport à d'autres signaux qui seraient utiles.

Dans l'état de l'art, la compatibilité électromagnétique, c'est-à-dire la capacité à permettre une interaction entre un émetteur électromagnétique qui émet un signal et un récepteur électromagnétique configuré pour recevoir ce signal, est le plus souvent assurée par des moyens fréquentiels notamment par la mise en place de filtres hyperfréquences commutables. La compatibilité peut aussi être réalisée dans le domaine temporel en utilisant un signal vidéo pour commuter le récepteur.

Ainsi, différents systèmes de gestion de compatibilité électromagnétique peuvent être utilisés, comme énoncés ci-dessous :
- Des filtres analogiques commutables. Ces filtres analogiques sont activés à la demande de l'opérateur lorsque l'émetteur du perturbateur émet. Ce système présente néanmoins l'inconvénient de « couper » en permanence toute une bande de fréquence prédéterminée. Ces filtres commandés par l'opérateur sont généralement utilisés pour supprimer des signaux de communication de bord mais ne sont pas applicables aux radars de bords qui émettent dans la même bande de fréquence que les émetteurs d'intérêt.
- Un filtre hyperfréquence fixe en tête du récepteur permettant une désensibilisation du récepteur. Ce système atténue alors la puissance de tous les signaux de sorte que le signal du perturbateur ne sature pas le récepteur. Ce système est intéressant lorsque le perturbateur sature le récepteur en transmettant son signal perturbateur. Dans le cas contraire, un tel filtre est peu utile. De plus, ces filtres hyperfréquences sont généralement commutés par des opérateurs, ce qui amène un risque d'oubli ou de désensibilisation non souhaitée du récepteur dans la bande de fréquence du filtre.
- Un système de commutation du récepteur piloté par un signal vidéo. En effet, certains radars fournissent une interface de compatibilité sur laquelle ils renvoient leur signal vidéo. Ce signal est utilisé pour commuter le récepteur temporellement de sorte qu'il ne reçoive pas pendant la durée des émissions du radar. Cette méthode, utilisée notamment pour les récepteurs analogiques de guerre électronique, a l'inconvénient de couper toute la bande de fréquence à un instant donné, ainsi les signaux reçus simultanément à une autre fréquence ne sont pas détectés. Cette méthode ne convient que pour des radars avec des formes d'onde qui ont un facteur de forme élevé.
- Il peut également être envisagé d'améliorer le découplage entre le récepteur et le perturbateur à bord de la plateforme. Le placement des perturbateurs peut alors être optimisé pour réduire le niveau du signal en entrée du récepteur. L'utilisation de jupes permettant de masquer le rayonnement électromagnétique du perturbateur peut également être envisagée. Cependant, les contraintes d'installation à bord étant fortes, ces techniques ne sont souvent pas suffisantes pour obtenir un découplage suffisant.

Avec l'évolution des technologies radar, et notamment la puissance crête qui est moins importante bien que malgré tout perturbante pour le récepteur et pouvant alors être compensée par un facteur de forme et une agilité en fréquence plus importante, ces mesures citées précédemment ne sont plus suffisantes.

Certains émetteurs proposent alors des interfaces de compatibilité numériques, l'émetteur envoie un message sur une liaison de donnée qui prévient de la durée et de l'excursion en fréquence des émissions. Ces informations sont utilisées par le récepteur numérique pour filtrer les signaux reçus pendant cette durée dans cette plage de fréquence.

Cependant, cette méthode présente l'inconvénient d'obliger le fabricant de l'émetteur à fournir une interface numérique spécifique et impose au fabricant du récepteur de développer de son côté une interface spécifique à chacun des perturbateurs puisque ces interfaces ne sont généralement pas standardisées.

L'invention propose de résoudre ce problème en recevant directement les signaux perturbateurs sur une voie dédiée sans avoir recours à une interface spécifique fournie par l'émetteur perturbateur de bord. Plus précisément, l'invention propose de réaliser un tel masquage en utilisant une voie de réception auxiliaire, différente de la voie de réception principale du récepteur, dont le rôle est d'être une voie « témoin » associée à un réseau d'antennes de mesure en champ proche disposées à proximité des perturbateurs.

L'intérêt de l'invention est de proposer une méthode de compatibilité qui peut être déployée sur n'importe quel type d'équipement sans perturber son fonctionnement. Le constructeur du récepteur n'est alors plus tributaire des interfaces de compatibilité fournies par les autres équipementiers du domaine.

L'invention autorise également la mise en oeuvre de filtrage adaptatif qui permettrait de discerner des signaux plus faibles que les perturbateurs.

A cet effet, l'invention a pour objet un dispositif de réception électromagnétique comprenant une antenne de réception principale d'un signal incident et une voie de réception principale configuré pour traiter le signal incident, le dispositif de réception électromagnétique comprenant une antenne de réception auxiliaire et une voie de réception auxiliaire reliée à ladite antenne de réception auxiliaire, l'antenne de réception auxiliaire étant adaptée pour être disposée en direction d'un émetteur perturbateur et configurée pour recevoir un signal perturbateur depuis l'émetteur perturbateur, la voie de réception auxiliaire étant configurée pour traiter le signal perturbateur, le dispositif de réception électromagnétique comprenant également un bloc de comparaison de signal et de suppression du signal perturbateur apte à comparer le signal incident de la voie de réception principale et le signal perturbateur et adapté pour supprimer le signal perturbateur du signal incident en fonction de ladite comparaison.

Selon un aspect de l'invention, l'antenne de réception auxiliaire est disposée en champ proche par rapport à l'émetteur perturbateur, le champ proche étant défini par rapport à la dimension caractéristique de l'antenne de réception auxiliaire et par rapport à la longueur d'onde du signal perturbateur.

Selon un aspect de l'invention, la voie de réception auxiliaire comprend un système de transmission du signal perturbateur reçu par l'antenne de réception auxiliaire à la voie de réception auxiliaire, le système de transmission comprenant un ensemble de câbles hyperfréquences.

Selon un aspect de l'invention, le dispositif de réception électromagnétique comprend au moins deux antennes de réception auxiliaires et la voie de réception auxiliaire comprend au plus autant de convertisseur analogique-numérique que d'antennes de réception auxiliaire.

Selon un aspect de l'invention, le dispositif de réception électromagnétique comprend au moins deux antennes de réception auxiliaires et la voie de réception auxiliaire comprend un multiplexeur connecté aux au moins deux antennes de réception auxiliaires et apte à sommer les signaux perturbateurs reçus par les au moins deux antennes de réception auxiliaires.

Selon un aspect de l'invention, la voie de réception auxiliaire comprend un système de transmission du signal perturbateur reçu par l'antenne de réception auxiliaire à la voie de réception auxiliaire, le système de transmission comprenant un ensemble de liaisons à fibre optique.

Selon un aspect de l'invention, la voie de réception auxiliaire comprend un système de transmission du signal perturbateur reçu par l'antenne de réception auxiliaire à la voie de réception auxiliaire, le système de transmission comprenant un système de liaisons de données.

Selon un aspect de l'invention, le bloc de comparaison de signal et de suppression du signal perturbateur supprime le signal perturbateur du signal incident en obstruant un canal de fréquence prédéfinie.

Selon un aspect de l'invention, le bloc de comparaison de signal et de suppression du signal perturbateur supprime le signal perturbateur du signal incident en obstruant un canal temporel prédéfini.

Selon un aspect de l'invention, le bloc de comparaison de signal et de suppression du signal perturbateur est apte à générer un seuil de puissance de réception de signal.

Selon un aspect de l'invention, le bloc de comparaison de signal et de suppression du signal perturbateur comprend un dispositif de filtrage adaptatif du signal de l'émetteur perturbateur.

Selon un aspect de l'invention, la voie de réception auxiliaire comprend un filtre d'atténuation configuré pour diminuer la puissance du signal perturbateur.

Selon un aspect de l'invention, la voie de réception auxiliaire comprend un correcteur de conflit configuré pour identifier l'émetteur perturbateur.

Selon un aspect de l'invention, le dispositif de réception électromagnétique étant un goniomètre.

L'invention a également trait à un procédé de réception électromagnétique comprenant les étapes suivantes :
- Réception d'un signal incident par une antenne de réception principale,
- Traitement du signal incident par une voie de réception principale connectée à l'antenne de réception principale,
- Réception d'un signal perturbateur par une antenne de réception auxiliaire depuis un émetteur perturbateur,
- Traitement du signal perturbateur par une voie de réception auxiliaire connectée à l'antenne de réception auxiliaire,
- Comparaison du signal perturbateur traité par la voie de réception auxiliaire et du signal incident traité par la voie de réception principale,
- Si la comparaison est affirmative, suppression du signal perturbateur du signal incident.

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente un dispositif de réception électromagnétique selon l'invention ;
[Fig.2] la figure 2 représente un dispositif de réception électromagnétique selon un premier mode de réalisation ;
[Fig.3] la figure 3 représente une première variante du dispositif de réception électromagnétique selon le premier mode de réalisation ;
[Fig.4] la figure 4 représente une deuxième variante du dispositif de réception électromagnétique selon le premier mode de réalisation ;
[Fig.5] la figure 5 représente le dispositif de réception électromagnétique selon un deuxième mode de réalisation ;
[Fig.6] la figure 6 représente une première variante du dispositif de réception électromagnétique selon le deuxième mode de réalisation ;
[Fig.7] la figure 7 représente une deuxième variante du dispositif de réception électromagnétique selon le deuxième mode de réalisation ;
[Fig.8] la figure 8 représente une troisième variante du dispositif de réception électromagnétique selon le deuxième mode de réalisation ;
[Fig.9] la figure 9 représente une quatrième variante du dispositif de réception électromagnétique selon le deuxième mode de réalisation ;
[Fig.10] la figure 10 représente une cinquième variante du dispositif de réception électromagnétique selon le deuxième mode de réalisation ;
[Fig.11] la figure 11 représente le dispositif de réception électromagnétique selon un troisième mode de réalisation ;
[Fig.12] la figure 12 représente le dispositif de réception électromagnétique comportant un correcteur de conflits selon le troisième mode de réalisation ;
[Fig.13] la figure 13 représente une variante du correcteur de conflit de la figure 12 ;
[Fig.14] la figure 14 représente le dispositif de réception électromagnétique comportant un dispositif de filtrage adaptatif ;
[Fig.15] la figure 15 représente le dispositif de réception électromagnétique dont la voie de réception auxiliaire comprend un filtre atténuateur de signal ;
[Fig.16] la figure 16 représente un procédé de réception électromagnétique selon l'invention.

Par souci de clarté, les mêmes éléments porteront les mêmes repères dans les différentes figures.

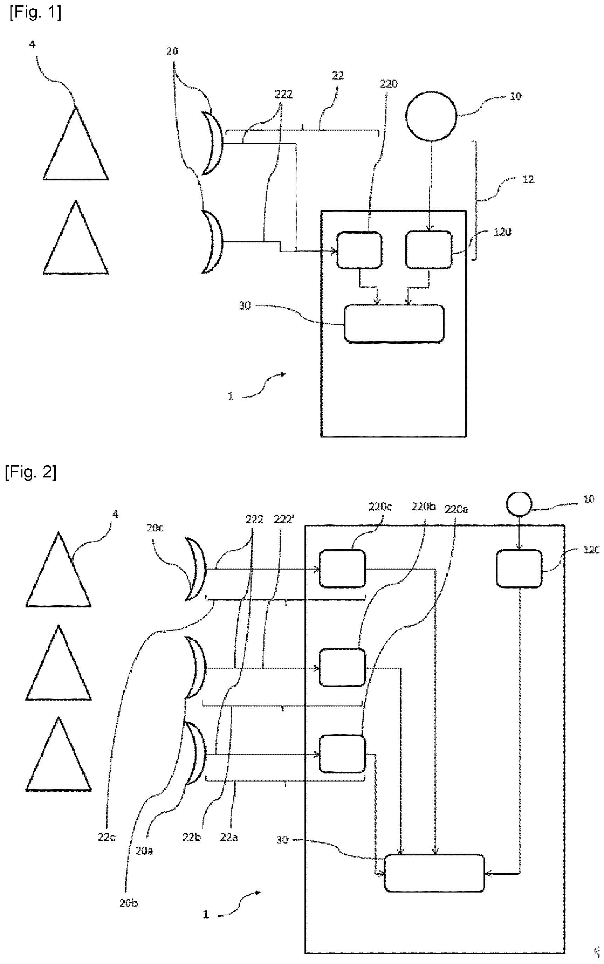

La figure 1 représente une vue schématique d'un dispositif de réception électromagnétique 1 comprenant une antenne de réception principale 10 d'un signal incident et une voie de réception principale 12 configuré pour traiter le signal incident reçu par l'antenne de réception principale10. Le dispositif de réception 1, par le biais de sa voie de réception principale 12 et de son antenne de réception principale 10, présente une large bande de fréquence, c'est-à-dire que sa bande passante est large de sorte à permettre de détecter un large spectre de signaux électromagnétiques. A titre d'exemple, la bande de fréquence est comprise entre plusieurs dizaines de MHz et plusieurs GHz. L'antenne de réception principale est ainsi une antenne de grande dimension qui est apte à recevoir des signaux de manière omnidirectionnelle, c'est-à-dire à recevoir un signal incident sur 360°. A titre d'exemple indicatif, l'antenne de réception principale 10 est une antenne planaire ou à patch. En variante, l'antenne de réception principale 10 est une antenne parabolique ou une antenne à cornet ou une antenne à fentes ou encore une antenne filaire.

La voie de réception principale 12 comprend par exemple un convertisseur analogique-numérique 120 pour traiter le signal incident. Or le signal incident regroupe en général un ensemble de signaux comprenant notamment un signal d'intérêt pour le dispositif de réception électromagnétique 1 et d'autres signaux jugés comme pouvant perturber le traitement du signal d'intérêt.

Le dispositif de réception électromagnétique 1 comprend également une antenne de réception auxiliaire 20 et une voie de réception auxiliaire 22 reliée à ladite antenne auxiliaire 20. En variante, le dispositif de réception électromagnétique 1 comprend plusieurs antennes de réception auxiliaires 20, comme représenté en figure 1, et un nombre au moins équivalent de voies de réception auxiliaires 22. De manière préférentielle, le dispositif de réception électromagnétique 1 comprend autant d'antennes de réception auxiliaires 20 que de voies de réception auxiliaires 22, chacune des voies de réception auxiliaires 22 étant respectivement reliée à une antenne de réception auxiliaire 20.

L'antenne de réception auxiliaire 20 est adaptée pour être disposée en direction d'un émetteur perturbateur 4 et configurée pour recevoir un signal électromagnétique perturbateur depuis l'émetteur perturbateur 4. En effet, le signal perturbateur peut être qualifié ainsi par rapport à l'antenne de réception principale 10 et par rapport à la voie de réception principale 12 car, lors de la réception d'un signal incident par l'antenne de réception principale 10, le signal perturbateur, qui est émis en même temps que le signal incident, est également reçu par l'antenne de réception principale 10. La voie de réception principale 10 se retrouve alors avec au moins deux types d'information distincts à traiter, une information fournie par le signal d'intérêt et une autre information fournie par le signal perturbateur et est donc perturbée dans le traitement du signal incident. L'antenne de réception auxiliaire 20 qui est associée à un émetteur perturbateur 4 est donc orientée pour faire face à l'émetteur perturbateur 4, c'est-à-dire aligné avec un axe d'émission de l'émetteur perturbateur 4. Un émetteur perturbateur 4 est un émetteur électromagnétique positionné à proximité immédiate du dispositif de réception électromagnétique 1.

L'antenne de réception auxiliaire 20 est une antenne de petite dimension, i.e. de plus petite dimension que l'antenne de réception principale. Le dimensionnement de l'antenne de réception auxiliaire 20 dépend notamment de la fréquence de travail, des caractéristiques physiques de l'antenne de réception auxiliaire 20 et de la voie de réception auxiliaire 22 ainsi que des performances de l'antenne de réception auxiliaire 20. A titre d'exemple indicatif, l'antenne de réception auxiliaire 20 est antenne patch de petites dimensions. En variante, l'antenne de réception auxiliaire 20 peut être une antenne parabolique de petite dimension ou tout autre type d'antenne positionnée en direction de l'émetteur perturbateur ou encore un dispositif de réception aérien de petite dimension positionnés en vis-à-vis du perturbateur.

La voie de réception auxiliaire 22 est quant à elle configurée pour traiter le signal perturbateur. En effet, le faible dimensionnement de l'antenne de réception auxiliaire 20 ainsi que l'orientation de l'antenne de réception auxiliaire 20 en direction de l'émetteur perturbateur 4 favorise la réception uniquement du signal perturbateur émis par l'émetteur perturbateur 4 et permet à la voie de réception auxiliaire 22 de ne traiter que le signal perturbateur émis par l'émetteur perturbateur 4 associé à l'antenne de réception auxiliaire 20.

Le dispositif de réception électromagnétique comprend également un bloc de comparaison de signal et de suppression du signal perturbateur 30 apte à comparer le signal incident de la voie de réception principale 12 et le signal perturbateur en provenance de la voie de réception auxiliaire 22 et est adapté pour supprimer le signal perturbateur du signal incident en fonction de ladite comparaison. Plus précisément, lorsque, lors de la comparaison, le bloc de comparaison de signal et de suppression du signal perturbateur 30 observe que le signal perturbateur traité par la voie de réception auxiliaire 22 se retrouve également au moins partiellement dans le signal incident traité par la voie de réception principale 12, le bloc de comparaison de signal et de suppression du signal perturbateur 30 permet la suppression de la portion de signal du signal incident jugée comme non essentielle au signal incident et non désirée pour la voie de réception principale 12, à savoir le signal perturbateur.

Différents modes de réalisation du bloc de comparaison de signal et de suppression du signal perturbateur 30 sont donnés plus loin.

Le signal délivré par le bloc de comparaison de signal et de suppression du signal perturbateur 30, correspondant au signal utile présent dans le signal incident est ensuite traité par le dispositif de réception électromagnétique 1.

La voie de réception auxiliaire 22 comprend par exemple un convertisseur analogique-numérique 220 pour convertir le signal perturbateur. Le convertisseur analogique-numérique 220 est configuré pour acquérir et mesurer un spectre de perturbation, le spectre de perturbation étant le spectre électromagnétique par fréquence du rayonnement à partir du signal perturbateur.

En effet, le spectre fréquentiel du signal perturbateur traité sur la voie de réception auxiliaire 22 est comparé au spectre du signal incident reçu sur la voie de réception principale 12.

Le signal perturbateur présent dans la voie de réception principale 12 est aussi présent dans la voie de réception auxiliaire 22, et pollue donc le signal incident détecté par l'antenne de réception principale 10 et traité par la voie de réception principale 12. Dès lors, lorsqu'un signal perturbateur reçu par une antenne de réception auxiliaire 20 et traité par la voie de réception auxiliaire 22 est également observé dans le signal incident, c'est-à-dire comme faisant partie du signal incident, par le biais de la comparaison, alors c'est que le signal d'intérêt contenu également dans le signal incident est pollué par ce signal perturbateur qui doit être supprimé. La comparaison permet donc de savoir si un signal perturbateur a été traité par la voie de réception principale 12 et par la voie de réception secondaire 22.

. Dès lors, le bloc de comparaison de signal et de suppression du signal perturbateur 30 supprime le signal perturbateur du signal incident de sorte à permettre au dispositif de réception électromagnétique 1 de traiter uniquement l'information pertinente contenue dans le signal incident, à savoir le signal d'intérêt.

En outre, il est à noter que plus l'antenne de réception auxiliaire 20 est proche de l'émetteur perturbateur 4, plus la détection de la part de l'antenne de réception auxiliaire 20 et le traitement du signal perturbateur par la voie de réception auxiliaire 22 est précis. A titre d'exemple préférentiel, il peut également être envisagé que l'antenne de réception auxiliaire 20 soit positionnée en champ proche, et donc à proximité, par rapport à l'émetteur perturbateur 4. On définit ici le champ proche comme le champ sphérique respectant la formule définissant la distance de Fraunhofer : *R* < 2*D*²/*λ*, où D représente la dimension caractéristique de l'antenne de réception auxiliaire 20, R la distance entre l'émetteur perturbateur 4 et l'antenne de réception auxiliaire 20 et λ la longueur d'onde de l'onde porteuse du signal perturbateur. Une antenne rayonne des champs électriques et magnétiques dont la configuration spatiale et les amplitudes diffèrent selon la distance existant entre l'antenne et le point d'observation. Il est possible de prendre en considération deux zones distinctes : la zone des champs proches ou zone de Fresnel et la zone des champs lointains ou zone de Fraunhofer. La zone de champ proche est ainsi séparée de la zone de champ lointain par la distance de Fraunhofer.

Pour une antenne de dimension caractéristique D, la distance par rapport à cette antenne de la frontière entre ces champs se calcule en divisant 2D² par la longueur d'onde. En deçà de cette distance se trouve donc en zone de champ proche. Au-delà de la distance de Fraunhofer se trouve dans la zone de champ lointain.

En fonction de l'architecture de l'antenne de réception auxiliaire 20, la dimension caractéristique D de l'antenne de réception auxiliaire 20 peut être la longueur de l'antenne de réception auxiliaire 20 s'il s'agit d'une antenne de type filaire ou de type patch ou alors le diamètre de l'antenne de réception auxiliaire 20 s'il s'agit d'une antenne de réception auxiliaire à ouverture ou à réflecteurs.

Dès lors, l'antenne de réception auxiliaire 20 est disposée en direction de l'émetteur perturbateur 4 et à proximité de l'émetteur perturbateur 4 de sorte à optimiser la réception du signal perturbateur.

Le positionnement de l'antenne de réception auxiliaire 20 à proximité de l'émetteur perturbateur 4 présente également l'avantage de permettre d'avoir un dimensionnement de l'antenne de réception auxiliaire 20 de taille très réduite de manière à ne pas perturber les émissions de l'émetteur perturbateur 4, lui-même émettant pour un objectif précis.

A titre d'exemple indicatif, il peut également être envisagé que l'antenne de réception auxiliaire 20 soit une antenne patch de petites dimensions accolées directement sur les antennes des différents émetteurs perturbateurs 4. En variante, un dispositif aérien de petites dimensions, tel qu'un drone par exemple, positionné en vis-à-vis, c'est-à-dire à distance, de l'émetteur perturbateur 4 apte à détecter le signal perturbateur peut être disposé à faible distance de l'émetteur perturbateur 4 de manière à être dans le champ proche de l'émetteur perturbateur 4.

L'utilisation d'un dispositif aérien à distance présente l'avantage de pouvoir recevoir plusieurs signaux perturbateurs de différents émetteurs perturbateurs en même temps ce qui diminue le nombre d'antenne de réception auxiliaires 20 nécessaires. Néanmoins, un tel dispositif aérien peut être difficile à mettre en place, notamment à cause de l'impact de l'environnement et peut parfois perturber le fonctionnement de l'émetteur perturbateur 4.

Afin de permettre la transmission du signal perturbateur reçu par l'antenne de réception auxiliaire 20 jusqu'au convertisseur analogique-numérique 220 de la voie de réception auxiliaire 22, la voie de réception auxiliaire 22 comprend un système de transmission 222 du signal perturbateur en provenance de l'émetteur perturbateur 4 et reçu par l'antenne de réception auxiliaire 20 depuis cette dernière jusqu'à la voie de réception auxiliaire 22.

Selon un premier mode de configuration représenté en figure 2, le système de transmission 222 comprend un ensemble de câbles hyperfréquences 222'.

Chaque antenne de réception auxiliaire 20 est déportée par l'intermédiaire des câbles hyperfréquences 222'. Dès lors, chaque signal perturbateur reçu par une antenne de réception auxiliaire 20 est envoyé vers les composants de traitement de la voie de réception auxiliaire 22, comme le convertisseur analogique-numérique 220.

Selon une première variante, représentée en figure 2, le dispositif de réception électromagnétique 1 comprend autant d'antennes de réception auxiliaire 20 que de convertisseurs analogiques-numériques 220de sorte qu'une antenne de réception auxiliaire 20a est connectée à un seul et unique convertisseur analogique-numérique 220a et donc que le convertisseur analogique numérique 220a est uniquement connectée à cette antenne de réception auxiliaire 20a générant alors une voie exclusive 22a par connexion entre l'antenne de réception auxiliaire 20a et le convertisseur analogique numérique 222a, la connexion se faisant par le biais des câbles hyperfréquences 222'. De plus, l'antenne de réception auxiliaire 20a est disposée de sorte à ne recevoir que le signal perturbateur en provenance de l'émetteur perturbateur 4a. Autrement dit, chaque voie exclusive, et donc chaque convertisseur analogique numérique 220 et chaque antenne de réception auxiliaire 20 interconnectés, est dédiée à la réception d'un signal perturbateur respectif en provenance d'un émetteur perturbateur 4.

Dès lors, il est également possible d'observer une deuxième antenne de réception auxiliaire 20b qui est disposée de sorte à ne recevoir que le signal perturbateur en provenance d'un deuxième émetteur perturbateur 4b et qui est connectée à un seul et unique deuxième convertisseur analogique-numérique 220b générant alors une deuxième voie exclusive 22b par connexion entre la deuxième antenne de réception auxiliaire 20b et le deuxième convertisseur analogique numérique 220b et d'observer une troisième antenne de réception auxiliaire 20c qui est disposée de sorte à ne recevoir que le signal perturbateur en provenance d'un troisième émetteur perturbateur 4c et qui est connectée à un seul et unique troisième convertisseur analogique-numérique 220c générant alors une troisième voie exclusive 22c par connexion entre la troisième antenne de réception auxiliaire 20c et le troisième convertisseur analogique numérique 220c. Chaque convertisseur analogique-numérique 220 des voies exclusives est ainsi connecté au bloc de comparaison de signal et de suppression du signal perturbateur 30 afin de transmettre à ce dernier le spectre de perturbation traité à partir du signal perturbateur détecté. Le bloc de comparaison de signal et de suppression du signal perturbateur 30 effectue alors la comparaison par rapport au spectre de fréquence du signal incident reçu par l'antenne de réception principale 10 et traité par la voie de réception principale 12.

A titre d'exemple indicatif, lorsque plusieurs signaux perturbateurs sont identifiés, la comparaison faite par le bloc de comparaison de signal et de suppression du signal perturbateur 30 peut se faire en comparant chaque signal perturbateur traité par une voie exclusive 22 au signal incident traité par la voie de réception principale 12 de manière unitaire.

Selon une variante, le bloc de comparaison de signal et de suppression du signal perturbateur 30 peut également regrouper tous les signaux perturbateurs reçus et traités et comparer ce regroupement de signaux perturbateurs au signal incident traité par la voie de réception principale 12.

Cette configuration présente l'avantage de permettre de facilement identifier l'émetteur perturbateur 4 et d'optimiser chaque voie exclusive, et donc chaque convertisseur analogique-numérique 220 et chaque antenne de réception auxiliaire 20 interconnectés en fonction d'un émetteur perturbateur 4 précis.

Néanmoins, cette configuration est également complexe à mettre en place du fait du nombre potentiellement important de voies exclusives et donc de convertisseurs analogiques-numériques 220 et d'antennes de réception auxiliaires 20 à utiliser et donc coûteuse en termes de besoin technique.

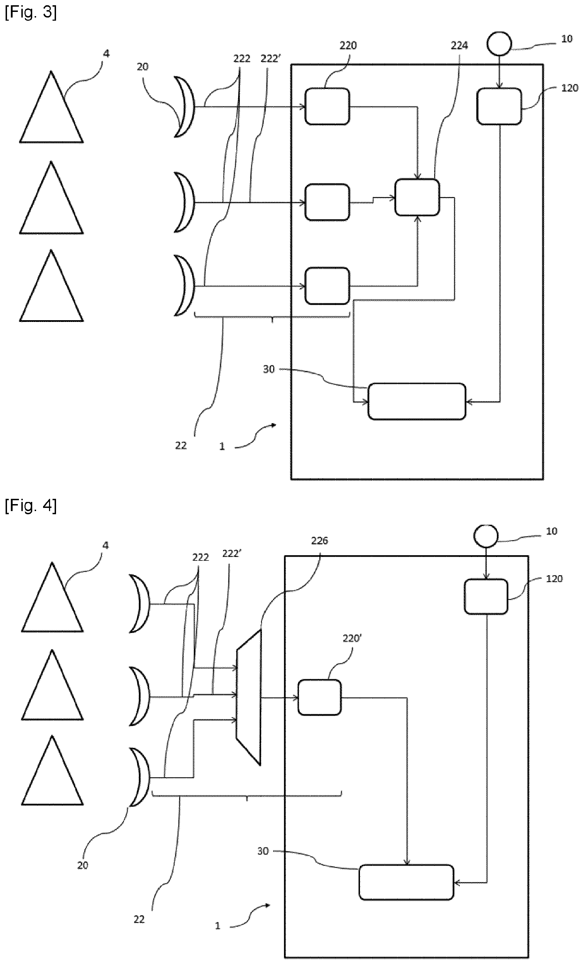

Selon une variante, représentée en figure 3, il peut être envisagé que la voie de réception auxiliaire 22 comprenne un dispositif de rassemblement des spectres perturbateurs 224, disposé après chaque convertisseur analogique-numérique de sorte à être connecté à toutes les voies exclusives. Le dispositif de rassemblement des spectres perturbateurs 224 est alors configuré pour sommer les spectres perturbateurs traités par chaque convertisseur analogique numérique de la voie de réception auxiliaire 22 et transmettre cette sommation des spectres perturbateurs au bloc de comparaison de signal et de suppression du signal perturbateur 30. Cette variante présente l'avantage de réduire le traitement exigible au niveau du bloc de comparaison de signal et de suppression du signal perturbateur 30 qui reçoit directement un spectre global de fréquence qui présente tous les émetteurs perturbateurs 4.

Selon une variante, représentée en figure 4, il peut également être envisagé qu'un seul et unique convertisseur analogique-numérique 220' soit connecté à toutes les antennes de réception auxiliaires 20. Pour ce faire, la voie de réception auxiliaire 22 comprend un multiplexeur 226 permettant de regrouper tous les signaux perturbateurs reçu des différentes antennes de réceptions auxiliaire 20 sous un seul et unique signal perturbateur global transmis ensuite à l'unique convertisseur analogique-numérique 220'. Le convertisseur analogique-numérique 220' traite alors ce signal global perturbateur et transmet un spectre global de perturbation au bloc de comparaison de signal et de suppression du signal perturbateur 30. Comme pour la variante présentée en figure 3, cette variante présente l'avantage de réduire le traitement exigible au niveau du bloc de comparaison de signal et de suppression du signal perturbateur 30 qui reçoit directement un spectre global de fréquence qui présente tous les émetteurs perturbateurs 4. Cette variante présente également l'avantage de limiter le besoin technique à un seul convertisseur analogique-numérique, simplifiant également sa mise en oeuvre.

Il peut également être envisagé de combiner les différentes variantes des figures 2, 3 et 4. Ainsi, il peut être envisagé de « sommer » deux ou plusieurs spectres perturbateurs traités par deux ou plusieurs convertisseur analogique-numérique, à l'image de la variante présenté en figure 3 tout en laissant isolé une voie exclusive, à l'image de la variante représentée en figure 2. C'est notamment le cas lorsque deux perturbateurs présentent un spectre fréquentiel proche. Il peut également être envisagé de multiplexer deux ou plusieurs signaux perturbateurs en amont du traitement effectué par un convertisseur analogique numérique de sorte que deux ou plusieurs antennes de réception auxiliaires sont connectées à un convertisseur analogique-numérique, comme il est présenté en figure 4, tout en laissant isolé une voie exclusive, à l'image de la variante représentée en figure 2. C'est notamment le cas lorsque des émetteurs perturbateurs sont disposés à proximité les uns des autres, permettant de réduire l'utilisation en câbles hyperfréquence alors que d'autres émetteurs perturbateurs sont plus éloignés. Il peut également être envisagé de combiner ces trois variantes des figures 2, 3 et 4.

Ainsi, la voie de réception auxiliaire 22 peut comprendre au plus autant de convertisseurs analogiques-numériques 220 que d'antennes de réception auxiliaires 20.

Et, dans la situation où le dispositif de réception électromagnétique 1 comprend au moins deux antennes de réceptions auxiliaires 20, la voie de réception auxiliaire 22 peut comprendre un multiplexeur 226 connecté à au moins deux antennes de réception auxiliaires 20 et apte à sommer les signaux perturbateurs reçus par les au moins deux antennes de réception auxiliaires 20, le multiplexeur 226 étant connecté à un convertisseur analogique-numérique apte à traiter cette sommation de signaux perturbateurs.

L'utilisation du système de transmission par câbles hyperfréquences est à privilégier selon une situation dans laquelle les émetteurs perturbateurs 4 sont à proximité du dispositif de réception électromagnétique 1. En effet, les pertes de propagation dans un câble hyperfréquence sont de l'ordre de 1dB/m, il est donc nécessaire de garder une cohérence de temps de propagation entre les différents signaux perturbateurs ainsi déportés, et notamment dans le cas où il y a des différences importantes de longueurs entre des émetteurs perturbateurs. Il peut cependant être envisagé d'incorporer des amplificateurs à la voie de réception auxiliaire 22 afin de compenser les pertes de propagation. Néanmoins, selon une configuration d'utilisation d'un système de transmission 222 à partir de câbles hyperfréquences, la longueur du système de transmission 222 entre une antenne de réception auxiliaire 20 et le dispositif de réception électromagnétique 1 est inférieur à une centaine de mètre.

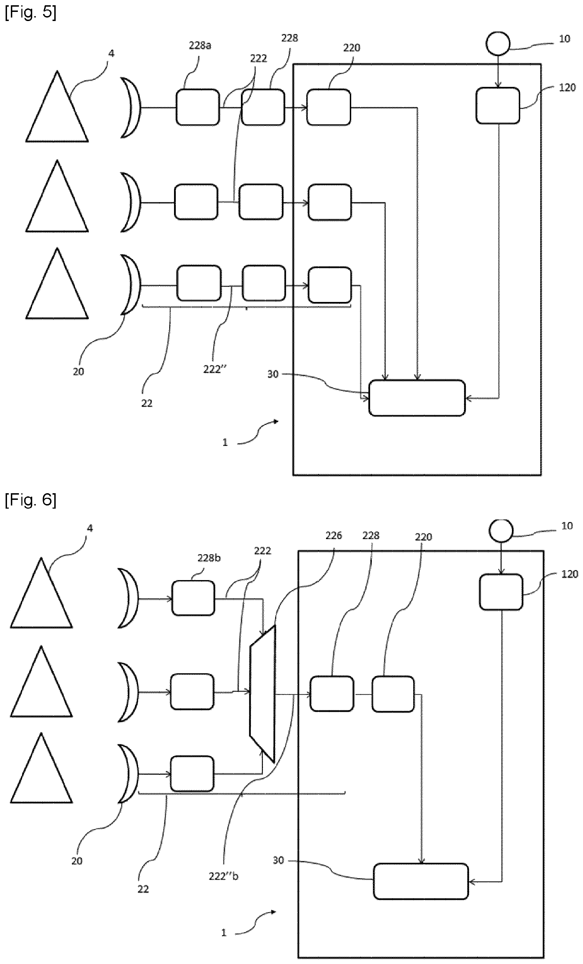

Selon un deuxième mode de configuration, le système de transmission 222 peut comprendre un ensemble de liaisons par fibre optique 222", comme représenté en figure 5.

L'ensemble de liaisons par fibre optique présente l'intérêt :
- que l'architecture du système de transmission 222, et notamment au niveau du regroupement des signaux perturbateurs avant détection est plus simple par rapport à un câblage hyperfréquence,
- que les liaisons à fibre optique sont peu affectées par les écarts de longueur entre les différentes voies puisque les pertes sont de l'ordre de 0,25dB/km,
- et que du fait de leur faible encombrement et souplesse, les fibres optiques sont plus simples à déployer.

Selon ce deuxième mode de réalisation, l'antenne de réception auxiliaire 20 est reliée à un dispositif de conversion électrique optique 228a, connecté à une photodiode 228 par liaison par fibre optique 222". La photodiode 228 permet alors de détecter le signal perturbateur qui a été placé sur une porteuse optique par le dispositif de conversion électrique optique 228a, signal perturbateur en provenance de l'antenne de réception auxiliaire 20. La photodiode 228 réalise une fonction de conversion optique électrique. La photodiode 228 est également connectée à un convertisseur analogique-numérique ou tout autre outil de traitement du signal de sorte que le signal perturbateur en sortie de la photodiode 228 est envoyé vers le convertisseur analogique numérique 220 afin d'être traité. Comme pour le premier mode de réalisation, chaque le convertisseur analogique numérique 220 est alors relié au bloc de comparaison de signal et de suppression du signal perturbateur 30. Dans ce mode de réalisation, la conversion électrique optique peut être réalisée par exemple via un composant actif optique dont la puissance optique est modulée par le signal en provenance de l'antenne de réception auxiliaire 20, par une modulation de son courant de polarisation, ou bien par un dispositif associant une source lumineuse stable et un modulateur externe connecté à l'antenne de réception auxiliaire 20. Le rôle de ce modulateur est d'appliquer une modulation à la puissance optique présente à son entrée.

Si le dispositif de réception électromagnétique 1 comprend au moins deux antennes de réception auxiliaires 20, alors, comme représenté en figure 5, chaque antenne de réception auxiliaire 20 est reliée à une seule photodiode 228 et chaque photodiode 228 est reliée à une seule antenne de réception auxiliaire 20 de sorte à générer, comme dans le premier mode de réalisation, une voie exclusive. Le dispositif de réception électromagnétique comprend alors autant de photodiodes 228 que d'antennes de réception auxiliaire 20.

Selon une première variante, représentée en figure 6, il peut être envisagé que les convertisseurs électriques optiques 228bsoient connectées à un multiplexeur 226 regroupant ainsi les signaux perturbateurs sur une seule fibre optique 222"b connectée à une photodiode 228 présentant en sortie un seul signal perturbateur global transmis ensuite à un convertisseur analogique numérique 220. Cette variante présente l'avantage de réduire le nombre de convertisseurs analogique numérique nécessaire et donc de réduire le besoin technique.

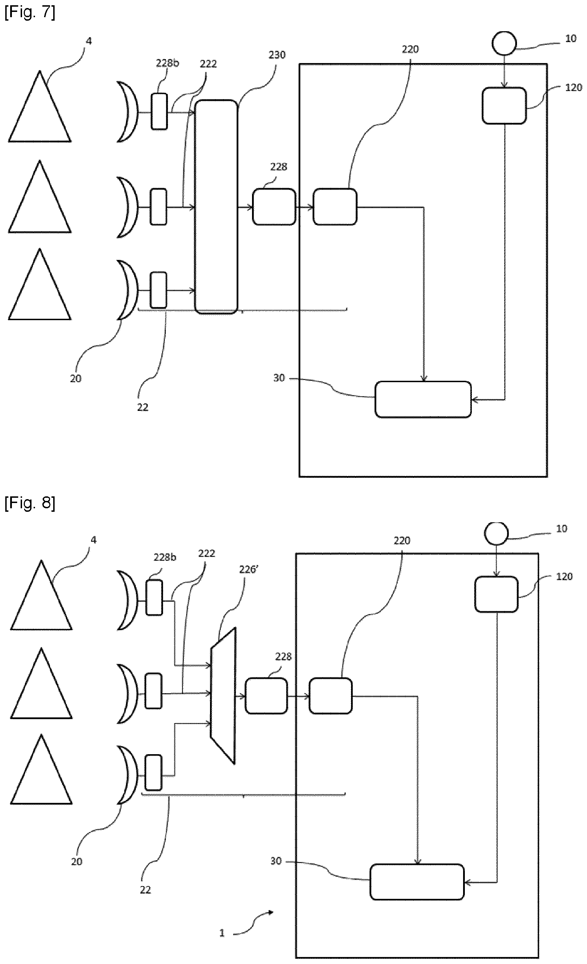

Selon une deuxième variante, représentée en figure 7, les signaux optiques perturbateurs détectés par les antennes de réception auxiliaire 20 sont placés sur porteuse optique via les dispositifs de conversion électrique optique 228b, et sont sommés par un coupleur optique 230. Le coupleur optique 230 est configuré pour sommer ou regrouper l'ensemble des signaux optiques détectés par les antennes de réception auxiliaire 20 sur une seule voie. Le coupleur optique 230 est également connecté à une photodiode 228 de sorte que le signal optique en sortie du coupleur optique 230 est détecté par la photodiode 228. La photodiode 228 transmet ensuite le signal perturbateur détecté vers un convertisseur analogique numérique 220 ou un outil de traitement du signal perturbateur. Selon cette variante, il est nécessaire de choisir les différentes longueurs d'ondes des dispositifs de conversion électrique optique 228b afin que les longueurs d'ondes soient suffisamment espacées pour ne pas générer de signaux parasites de battement. Ces dispositifs de conversion électrique optique 228b peuvent être soit des composants actifs optiques dont le courant de polarisation est modulé, soit l'association d'une source optique stable et d'un modulateur modulant la puissance optique de cette source optique. Cette configuration présente l'avantage de limiter le besoin technique à une photodiode et à un convertisseur analogique numérique.

A titre informatif, le coupleur optique 230 permet donc de sommer un ensemble de signaux optiques perturbateurs et le multiplexeur 226 permet de sommer un ensemble de signaux perturbateurs.

Selon une troisième variante, représentée en figure 8, il peut également être envisagé que, lorsque les signaux optiques perturbateurs présentent des porteuses optiques différentes, c'est-à-dire ayant une longueur d'onde différente, les signaux optiques perturbateurs détectés par les antennes de réception auxiliaire 20 soient regroupés sur une seule liaison à fibre optique 222"b par le biais d'un multiplexeur optique 226'. Dès lors, le multiplexeur optique 226' est connecté aux dispositifs de conversion électrique optique 228b. Il s'agit alors d'un multiplexage en longueur d'onde. Le multiplexage en longueur d'onde permet d'augmenter le débit sur une fibre optique en faisant circuler plusieurs signaux de longueurs d'onde différentes sur une seule fibre, en les mélangeant à l'entrée. Par la suite, les signaux optiques perturbateurs multiplexés sont transmis à la photodiode 228 qui les détecte. Comme énoncé précédemment, la photodiode 228 est également connectée à un convertisseur analogique numérique 220 ou un outil de traitement du signal perturbateur transmis par la photodiode 228.

Il peut également être envisagé que la voie de réception auxiliaire 22 comprenne un démultiplexeur permettant de séparer les différents signaux optiques perturbateurs en amont de la photodiode 228 ou du convertisseur analogique numérique 220.

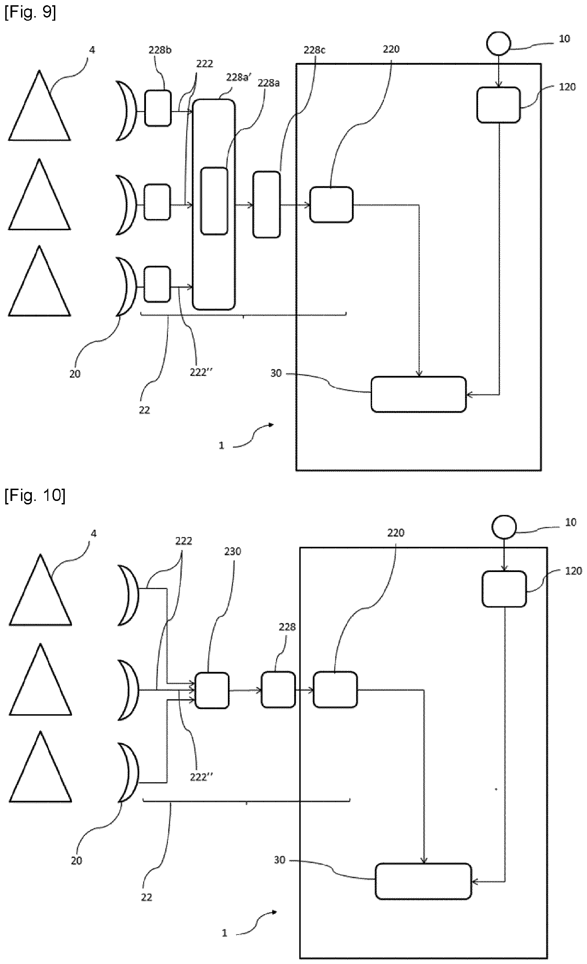

Selon une quatrième variante, représentée en figure 9, les signaux optiques perturbateurs peuvent être transmis des antennes de réception auxiliaire 20 par le biais de liaisons à fibres optiques 222" vers une photodiode 228a. La photodiode 228a est alors comprise dans un moyen de sommation 228a' configuré pour regrouper les différentes liaisons à fibre optique 222" et à les imager vers un récepteur optique 228c. Les signaux perturbateurs sont alors envoyés vers un convertisseur analogique numérique 220. Selon cette variante, il n'y a plus de contraintes sur les choix de longueurs d'onde des signaux optiques perturbateurs permettant d'éviter les battements, la sommation optique permettant de garantir qu'il n'y a pas de battements. Dans les dispositifs comprenant notamment le moyen de sommation 228a' et le récepteur optique 228c déjà réalisés, il a été démontré la possibilité de sommer jusqu'à une vingtaine de signaux. Cependant, l'emploi de fibres optiques spécifiques multicoeurs devrait permettre d'atteindre des rangs de sommation plus importants (plusieurs dizaines), ce qui est bien supérieur aux besoins de la plupart des applications envisagées.

Selon une cinquième variante, représentée en figure 10, il peut être envisagé de relier les antennes de réception auxiliaires 20 au coupleur optique 230. Ce coupleur optique 230 est alors configuré pour transmettre N signaux optiques perturbateurs, où N représente le nombre d'antennes de réception auxiliaires 20 reliées et dont le signal perturbateur doit être déporté en direction de la voie de réception auxiliaire 22. Plus précisément, le coupleur optique 230 est relié à une photodiode 228.

A titre d'exemple indicatif, la photodiode 228 peut également être remplacée par tout autre capteur ou récepteur optique permettant de détecter un signal optique.

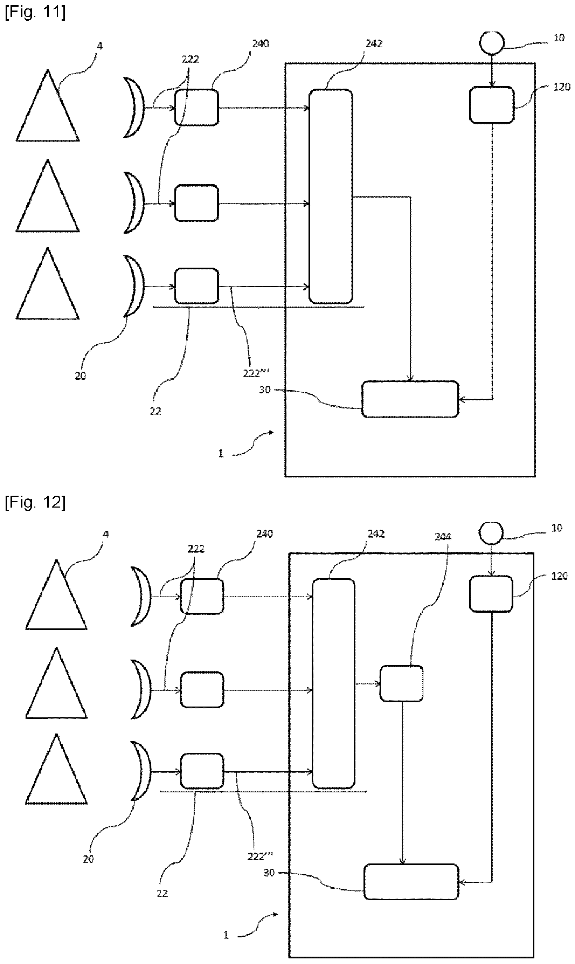

Selon un troisième mode de réalisation, le système de transmission 222 peut comprendre un système de liaisons de données 222"', comme représenté en figure 11. Le système de liaisons de données 222‴ est configuré pour transporter, de manière « numérique » des spectres de perturbations.

Selon ce troisième mode de réalisation, chaque émetteur perturbateur 4 est associé à une antenne de réception auxiliaire 20 et à un récepteur 240 adapté à la bande d'émission de l'émetteur perturbateur 4 et au niveau du signal perturbateur émis. La chaîne de transmission du signal perturbateur se fait donc de l'émetteur perturbateur 4 en direction de l'antenne de réception auxiliaire 20 qui le transmet au récepteur 240. Ce mode de réalisation permet ainsi d'obtenir une conception plus simple des récepteurs par rapport à une architecture avec un récepteur unique recevant la somme des signaux perturbateurs des différents émetteurs perturbateurs 4 qui doit alors être capable d'échantillonner une très large bande et avoir une dynamique élevée.

Chaque récepteur 240 adapté à un émetteur perturbateur 4 applique un traitement sur le signal perturbateur pour détecter et caractériser le signal perturbateur 4 émis. Le récepteur 240 génère alors un spectre de perturbation spécifique au récepteur perturbateur 4 pour lequel le récepteur 240 a été adapté. Le spectre de perturbation est ensuite transmis à une interface de réception et de compaction 242 permettant de rassembler tous les spectres de perturbation générés par les différents récepteurs 240, dans le cas où plusieurs récepteurs 240 sont envisagés. L'interface de réception et de compaction 242 transmet alors un spectre de perturbation complet regroupant tous les spectres de perturbation identifiés en direction du bloc de comparaison de signal et de suppression du signal perturbateur 30.

Cette architecture permet de ne pas modifier l'architecture existante du dispositif de réception électromagnétique 1 à large bande, l'ensemble du traitement du spectre perturbateur étant réalisé sur un récepteur annexe. La complexité est ainsi déportée sur ce récepteur 240 dédié à l'émetteur perturbateur 4, lequel doit avoir la réactivité suffisante pour faire l'analyse spectrale ainsi que l'envoi des caractéristiques du spectre de perturbation. De plus, à la différence du premier mode de réalisation et du deuxième mode de réalisation, le troisième mode de réalisation s'attache à transmettre de manière numérique et non physique.

En outre, les perturbateurs électromagnétiques fonctionnent généralement en bande étroite. Il est alors aisé de connaître la fréquence de repliement des perturbateurs électromagnétiques, dans le cas d'un échantillonnage, disposés à proximité du dispositif de réception électromagnétique 1. Selon une situation où plusieurs perturbateurs électromagnétiques se replient selon une même fréquence de repliement, le dispositif de réception électromagnétique 1 peut comprendre un correcteur de conflit 244, comme représenté en figure 12.

Le correcteur de conflit 244 est configuré pour distinguer les perturbateurs électromagnétiques ainsi que les signaux perturbateurs émis par les perturbateurs électromagnétiques fonctionnant selon une même fréquence de repliement.

Pour ce faire, le correcteur de conflit 244 est configuré pour induire une atténuation sur la chaîne de mesure des signaux perturbateurs, c'est-à-dire au niveau des antennes de réception auxiliaire 20 disposées en direction des émetteurs perturbateurs 4 pour lesquels il y a repliement de sorte à permettre une transmission des signaux perturbateurs avec des puissances suffisamment différentes pour les distinguer.

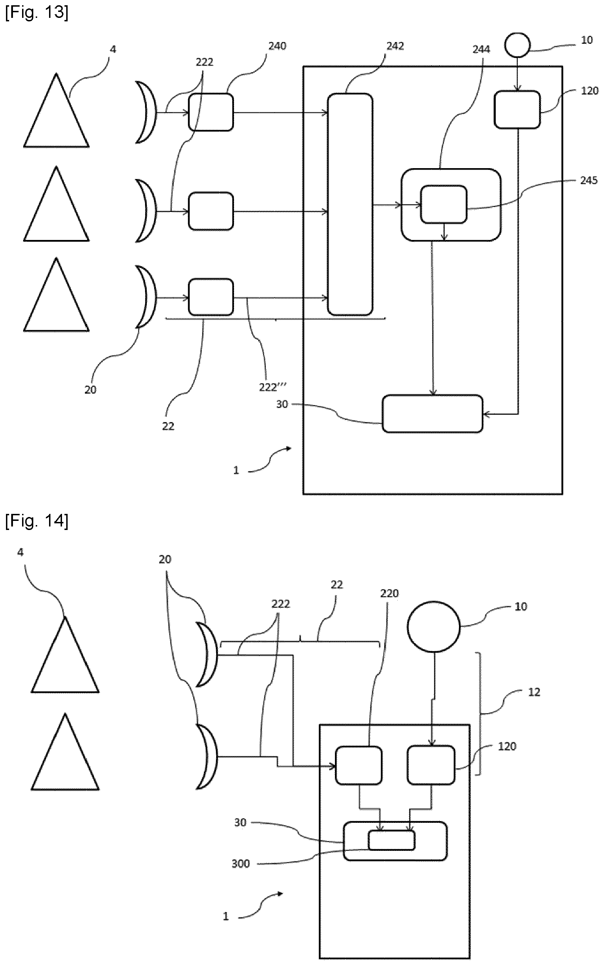

En variante, le correcteur de conflit 244 peut comprendre un outil de reconnaissance du perturbateur 245, comme représenté en figure 13, qui permet l'identification des perturbateurs fonctionnant selon une même fréquence de repliement par l'enregistrement des caractéristiques types de l'émission et de l'émetteur perturbateurs 4 comme par exemple la longueur d'impulsion ou de paquet ou encore le type de modulation. L'outil de reconnaissance du perturbateur 245 est une base de données regroupant l'ensemble des caractéristiques des perturbateurs connus à proximité du dispositif de réception électromagnétique 1. Dès lors, une fois le perturbateur reconnu à l'aide de l'outil de reconnaissance du perturbateur 245, la fréquence initiale du signal perturbateur est reconstruite pour permettre la comparaison du bloc de comparaison de signal et de suppression du signal perturbateur 30.

Le correcteur de conflit 244 et l'outil de reconnaissance du perturbateur 245 est particulièrement utile lorsque le dispositif de réception électromagnétique 1 est un récepteur à échantillonnage comme, par exemple, un goniomètre à sous-échantillonnage.

En outre, le bloc de comparaison de signal et de suppression du signal perturbateur 30 peut être configuré pour supprimer le signal perturbateur du signal incident de différentes manières.

Selon un premier mode de configuration du bloc de comparaison de signal et de suppression du signal perturbateur 30, le bloc de comparaison de signal et de suppression du signal perturbateur 30 peut utiliser le spectre de perturbation généré par le ou les convertisseurs analogiques numériques afin de « blanker » certains canaux fréquentiels de l'analyse spectrale effectuée par le dispositif de réception électromagnétique 1, les canaux fréquentiels blankés étant des fréquences pour lesquelles un ou plusieurs perturbateur impacte négativement la réception du dispositif de réception électromagnétique 1. Blanker signifie alors une suppression d'une partie de l'espace temps/fréquence du spectre de réception du dispositif de réception électromagnétique 1. Dès lors, le bloc de comparaison de signal et de suppression du signal perturbateur 30 empêche le dispositif de réception électromagnétique 1 de recevoir sur une fréquence spécifique et jugée perturbante pour le dispositif de réception électromagnétique 1 pendant une période donnée. Dès lors, le bloc de comparaison de signal et de suppression du signal perturbateur 30 supprime le signal perturbateur du signal incident en obstruant un canal de fréquence prédéfinie et/ou en obstruant un canal temporel prédéfini.

Selon un deuxième mode de configuration du bloc de comparaison de signal et de suppression du signal perturbateur 30, le bloc de comparaison de signal et de suppression du signal perturbateur 30 peut utiliser le spectre de perturbation généré par le ou les convertisseurs analogiques numériques afin de désensibiliser certains canaux fréquentiels de l'analyse spectrale effectuée par le dispositif de réception électromagnétique 1.

Désensibiliser signifie alors la mise en place d'un seuil de puissance nécessaire à la détection d'un signal incident détecté par l'antenne de réception principale 10 ou traité par la voie de réception principale 12 selon une fréquence définie et jugée perturbante pour le dispositif de réception électromagnétique 1. Cette suppression initiée par le bloc de comparaison de signal et de suppression du signal perturbateur 30 présente l'avantage de ne pas aveugler le dispositif de réception électromagnétique selon une gamme de fréquence. Dès lors, le bloc de comparaison de signal et de suppression du signal perturbateur 30 est apte à générer un seuil de puissance de réception de signal sur l'antenne de réception principale 10 et/ou sur la voie de réception principale 12.

Selon un troisième mode de configuration du bloc de comparaison de signal et de suppression du signal perturbateur 30, le bloc de comparaison de signal et de suppression du signal perturbateur 30 comprend un dispositif de filtrage adaptatif 300 du signal perturbateur, représenté en figure 14. A titre d'exemple indicatif, le dispositif de filtrage adaptatif 300 permet d'effectuer une soustraction numérique du spectre du signal incident traité par la voie de réception principale 12 par rapport au spectre de perturbation traité par la voie de réception auxiliaire 22. Ce mode de configuration est particulièrement adapté en cas de réception de signaux continus.

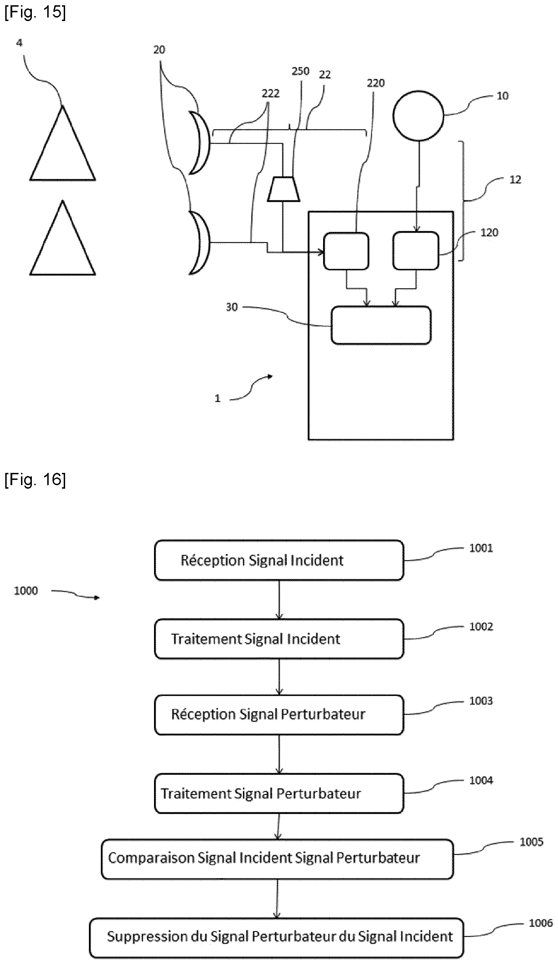

Selon un quatrième mode de configuration, il peut être envisagé d'ajouter un filtre d'atténuation 250 à la voie de réception auxiliaire 22, comme représenté en figure 15, afin de diminuer la puissance du signal perturbateur. En effet, l'utilisation d'un filtre d'atténuation 250 est particulièrement intéressante dans le cas où le perturbateur émet selon un niveau de puissance saturant pour le dispositif de réception électromagnétique 1. Dès lors, pendant l'émission de ce perturbateur saturant, un filtre d'atténuation 250 peut être activé lorsque l'antenne de réception auxiliaire 20 détecte le signal perturbateur ou lorsque la voie de réception auxiliaire 22 traite ce signal perturbateur.

Le bloc de comparaison de signal et de suppression du signal perturbateur 30 permet une suppression des signaux perturbateurs par comparaison des spectrogrammes. Cette méthode convient bien pour les signaux de courte durée avec une agilité en fréquence, typiquement des signaux radars ou des liaisons de communication FHSS. Il peut ainsi être envisagé de réaliser un « waterfall », c'est-à-dire une représentation en deux dimensions temporelles et fréquentiels des spectres des signaux reçus, sur la voie de réception auxiliaire 22 et à appliquer un seuil, permettant d'ignorer la partie du spectrogramme qui correspond aux signaux supérieurs au seuil, jugés perturbants.

En outre, il est mentionné ci-dessus différents moyens de transport des signaux comme par exemple la fibre optique ou encore les câbles hyperfréquences. Néanmoins, tout autre média peut être être utilisé pour transporter les signaux perturbateurs comme par exemple un transport radio.

Il peut également être envisagé de réaliser des traitements de signal analogique : les signaux perturbateurs sont détectés par les antennes de réception auxiliaire 20, et font l'objet de filtrage, de déphasage, et d'amplification avant d'être soustraits aux signaux d'intérêts issus de l'antenne de réception principale 10. Un tel dispositif fonctionnant uniquement en analogique nécessite cependant une calibration afin de déterminer précisément les niveaux d'amplification à appliquer, ainsi que les phases à appliquer, tout en ajustant temporellement les signaux perturbateurs.

L'invention propose également, comme représenté en figure 16, un procédé de réception électromagnétique 1000 comprenant les étapes suivantes :
- Réception d'un signal incident (1001) par une antenne de réception principale 10,
- Traitement du signal incident (1002) par une voie de réception principale 12 connectée à l'antenne de réception principale 10,
- Réception d'un signal perturbateur (1003) par une antenne de réception auxiliaire 20 depuis un émetteur perturbateur 4,
- Traitement du signal perturbateur (1004) par une voie de réception auxiliaire 22 connectée à l'antenne de réception auxiliaire,
- Comparaison (1005) du signal perturbateur traité par la voie de réception auxiliaire 22 et du signal incident traité par la voie de réception principale 12,
- Si la comparaison est affirmative, suppression (1006) du signal perturbateur du signal incident.

Autrement dit, lorsque la comparaison permet de mettre en évidence le fait que le signal perturbateur se retrouve également dans la signal incident, alors il y a suppression de cette partie du signal incident représentant le signal perturbateur reçu par l'antenne de réception auxiliaire 20 de sorte à épurer le signal incident de cette perturbation.

## Revendications

1. Dispositif de réception électromagnétique (1) comprenant une antenne de réception principale (10) d'un signal incident et une voie de réception principale (12) configuré pour traiter le signal incident, le dispositif de réception électromagnétique (1) comprenant une antenne de réception auxiliaire (20) et une voie de réception auxiliaire (22) reliée à ladite antenne de réception auxiliaire (20), l'antenne de réception auxiliaire (20) étant adaptée pour être disposée en direction d'un émetteur perturbateur (4) et configurée pour recevoir un signal perturbateur depuis l'émetteur perturbateur (4), la voie de réception auxiliaire (22) étant configurée pour traiter le signal perturbateur, le dispositif de réception électromagnétique (1) comprenant également un bloc de comparaison de signal et de suppression du signal perturbateur (30) apte à comparer le signal incident de la voie de réception principale (12) et le signal perturbateur et adapté pour supprimer le signal perturbateur du signal incident en fonction de ladite comparaison,
l'antenne de réception auxiliaire (20) étant disposée en champ proche par rapport à l'émetteur perturbateur (4), le champ proche étant défini par rapport à la dimension caractéristique de l'antenne de réception auxiliaire (20) et par rapport à la longueur d'onde du signal perturbateur.

2. Dispositif de réception électromagnétique (1) selon la revendication 1, dans lequel la voie de réception auxiliaire (22) comprend un système de transmission (222) du signal perturbateur reçu par l'antenne de réception auxiliaire (20) à la voie de réception auxiliaire (22), le système de transmission (222) comprenant un ensemble de câbles hyperfréquences (222').

3. Dispositif de réception électromagnétique (1) selon la revendication 2, comprenant au moins deux antennes de réception auxiliaires (20), dans lequel la voie de réception auxiliaire (22) comprend au plus autant de convertisseur analogique-numérique (220) que d'antennes de réception auxiliaire (20).

4. Dispositif de réception électromagnétique (1) selon la revendication 2, comprenant au moins deux antennes de réception auxiliaires (20), dans lequel la voie de réception auxiliaire (22) comprend un multiplexeur (226) connecté aux au moins deux antennes de réception auxiliaires (20) et apte à sommer les signaux perturbateurs reçus par les au moins deux antennes de réception auxiliaires (20).

5. Dispositif de réception électromagnétique (1) selon la revendication 1, dans lequel la voie de réception auxiliaire comprend un système de transmission (222) du signal perturbateur reçu par l'antenne de réception auxiliaire (20) à la voie de réception auxiliaire (22), le système de transmission (222) comprenant un ensemble de liaisons à fibre optique (222").

6. Dispositif de réception électromagnétique (1) selon la revendication 1, dans lequel la voie de réception auxiliaire (22) comprend un système de transmission (222) du signal perturbateur reçu par l'antenne de réception auxiliaire (20) à la voie de réception auxiliaire (22), le système de transmission (222) comprenant un système de liaisons de données (222‴).

7. Dispositif de réception électromagnétique (1) selon l'une des revendications 1 à 6, dans lequel le bloc de comparaison de signal et de suppression du signal perturbateur (30) supprime le signal perturbateur du signal incident en obstruant un canal de fréquence prédéfinie.

8. Dispositif de réception électromagnétique (1) selon l'une des revendications 1 à 7, dans lequel le bloc de comparaison de signal et de suppression du signal perturbateur (30) supprime le signal perturbateur du signal incident en obstruant un canal temporel prédéfini.

9. Dispositif de réception électromagnétique (1) selon l'une des revendications 1 à 8, dans lequel le bloc de comparaison de signal et de suppression du signal perturbateur (30) est apte à générer un seuil de puissance de réception de signal.

10. Dispositif de réception électromagnétique (1) selon l'une des revendications 1 à 9, dans lequel le bloc de comparaison de signal et de suppression du signal perturbateur (30) comprend un dispositif de filtrage adaptatif (300) du signal de l'émetteur perturbateur (4).

11. Dispositif de réception électromagnétique (1) selon l'une des revendications 1 à 10, dans lequel la voie de réception auxiliaire (22) comprend un filtre d'atténuation (250) configuré pour diminuer la puissance du signal perturbateur.

12. Dispositif de réception électromagnétique (1) selon l'une des revendications précédentes, dans lequel la voie de réception auxiliaire (22) comprend un correcteur de conflit (244) configuré pour identifier l'émetteur perturbateur (4).

13. Dispositif de réception électromagnétique (1) selon l'une des revendications précédentes, le dispositif de réception électromagnétique (1) étant un goniomètre.

14. Procédé de réception électromagnétique (1000), le procédé (1000) comprenant les étapes suivantes :
- Réception d'un signal incident (1001) par une antenne de réception principale (10),
- Traitement du signal incident (1002) par une voie de réception principale (12) connectée à l'antenne de réception principale (10),
- Réception d'un signal perturbateur (1003) par une antenne de réception auxiliaire (20) depuis un émetteur perturbateur (4),
- Traitement du signal perturbateur (1004) par une voie de réception auxiliaire (22) connectée à l'antenne de réception auxiliaire (20),
- Comparaison (1005) du signal perturbateur traité par la voie de réception auxiliaire (22) et du signal incident traité par la voie de réception principale (12),
- Si la comparaison est affirmative, suppression (1006) du signal perturbateur du signal incident.
